(19) Europäisches Patentamt / European Patent Office / Office européen des brevets

(11) **EP 3 835 063 B1**

(12) **FASCICULE DE BREVET EUROPEEN**

(45) Date de publication et mention de la délivrance du brevet:
**20.05.2026 Bulletin 2026/21**

(21) Numéro de dépôt: **20211974.9**

(22) Date de dépôt: **04.12.2020**

(51) Classification Internationale des Brevets (IPC):
**B32B 37/12** (2006.01)    **C09J 11/00** (2006.01)

(52) Classification Coopérative des Brevets (CPC):
**B32B 37/12;** B32B 2307/7242; B32B 2457/12

(54) **EMPILEMENT HAUTEMENT BARRIERE AUX GAZ NOTAMMENT POUR CELLULES PHOTOVOLTAIQUES**

HOCHGRADIG GASUNDURCHLÄSSIGER STAPEL, INSBESONDERE FÜR PHOTOVOLTAISCHE ZELLEN

HIGHLY GAS-BARRIERED STACK, ESPECIALLY FOR PHOTOVOLTAIC CELLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2019 FR 1914028**

(43) Date de publication de la demande:
**16.06.2021 Bulletin 2021/24**

(73) Titulaire: **Commissariat à l'Energie Atomique et aux Energies Alternatives
75015 Paris (FR)**

(72) Inventeur: **CROS, Stéphane
38054 Grenoble Cedex 09 (FR)**

(74) Mandataire: **Santarelli
Tour Trinity
1 bis Place de la Défense
92400 Courbevoie (FR)**

(56) Documents cités:
WO-A1-2013/015096    WO-A1-2013/027787
WO-A1-2017/086382    WO-A1-2018/042107
WO-A1-2019/008259    CN-A- 109 161 363

EP 3 835 063 B1

**Description**

## DOMAINE TECHNIQUE

La présente invention se rapporte au domaine général des empilements barrières aux gaz, particulièrement à l'eau et à l'oxygène.

L'invention concerne également un ensemble comprenant un support, une cellule photovoltaïque, telle qu'une cellule pérovskite, et un tel empilement.

L'invention concerne également un dispositif comprenant un support et un tel empilement.

L'invention concerne également des procédés de fabrication d'un tel film hautement barrières aux gaz, d'un tel ensemble et d'un tel dispositif.

L'invention est particulièrement intéressante puisqu'elle permet de fabriquer à faible coût des empilements hautement barrière aux gaz pouvant servir, par exemple, pour encapsuler et protéger des composants sensibles, comme des cellules photovoltaïques, ou pour améliorer les propriétés barrières au gaz d'un support.

## ÉTAT DE LA TECHNIQUE ANTÉRIEURE

Les films dits barrières aux gaz sont des films ayant des vitesses de transmission des gaz, par exemple à la vapeur d'eau (WVTR pour « Water Vapor Transmission Rate ») et à l'oxygène (OTR pour « Oxygen Transmission Rate »), réduites au regard de films polymères simples. Ainsi des films laminés intégrant un film d'éthylène alcool vinylique (EVOH), pour la réduction de l'OTR ou un film de poly(vinylidène dichloride) (PVDC) pour la réduction de l'OTR et du VWTR, sont fréquemment utilisés dans l'emballage alimentaire. Un autre moyen d'amélioration des propriétés barrières aux gaz d'un film polymère consiste au dépôt d'une couche dense inorganique, typiquement de l'aluminium (le film sera alors opaque) ou un oxyde métallique, par exemple, de type $SiO_x$ ou $AlO_x$ (le film sera alors transparent). Lorsque les films barrières sont formés par lamination de différents polymères ou par dépôt de couches minces par des procédés de type thermique (« Thermal Evaporation ») ou évaporation par faisceau d'électron (« Electron Beam Evaporation »), il est possible de produire plusieurs centaines de m$^2$ de films barrière au gaz par minute sur une même ligne. Les coûts de fabrication sont alors inférieurs à 1€/m$^2$. Les performances de tels films barrières dits « bas coût » (notés BC) en terme de WVTR sont néanmoins limitées et comprises entre 0,1 et 1g.m$^{-2}$.j$^{-1}$. L'utilisation de films barrières aux gaz BC aux performances limitées est largement répandue dans le domaine des emballages alimentaires ou pharmaceutiques.

Cependant, pour certaines applications et, notamment pour l'encapsulation de cellules photovoltaïques de type Organique (OPV), Inorganique (CIGS, CIS) ou hybride (Pérovskite), l'usage de films BC n'est pas adapté car les propriétés barrières aux gaz ne sont pas suffisantes pour atteindre de grande durée de vie. Il est alors impératif d'utiliser des films hautement barrière au gaz (notés HB) ayant un WVTR inférieur à 5.10$^{-2}$ g.$^{-2}$.jour$^{-1}$ voire ultra hautement barrière aux gaz (notés UHB pour « Ultra-High Barrier ») ayant un WVTR inférieur à 10$^{-3}$g.m$^{-z}$.j$^{-1}$. Pour réaliser de tels films HB ou UHB, il est alors nécessaire de recourir à des procédés plus complexes, pour réaliser des couches minces et denses ayant peu de défauts, comme, par exemple, le dépôt chimique en phase vapeur assisté par plasma (PECVD pour « Plasma-Enhanced Chemical Vapor Deposition ») ou encore le dépôt de couches minces atomiques (ALD pour « Atomic Layer Deposition »).

Cependant, pour de tels films, les coûts de fabrication sont supérieurs à 10€/m$^2$ du fait de la lenteur des procédés de dépôt de couches minces employés par rapport aux procédés de dépôt rapides employés pour les emballages alimentaire ou pharmaceutique. Par exemple, pour un dépôt PECVD, la vitesse de dépôt va de 0,1 à 1m/min contre plusieurs centaines de mètres par minutes pour l'évaporation thermique (« thermal evaporation ») comme divulgué par Fahlteich et al. (« The Role of Defects in Single- and Multi- Layer Barriers for Flexible Electronics », Fall 2014 SVC Bulletin).

Le document WO 2017/086382 prévoit un film stratifié barrière aux gaz comprenant : un premier film barrière doté d'un premier substrat, d'une première couche mince inorganique et d'une première couche de revêtement barrière aux gaz ; et un second film barrière doté d'un second substrat, d'une seconde couche mince inorganique et d'une seconde couche de revêtement barrière aux gaz ; dans lequel le premier film barrière et le second film barrière sont stratifiés via une couche adhésive de manière à ce que la première couche de revêtement barrière aux gaz et la seconde couche de revêtement barrière aux gaz se retrouvent face à face ; la distance entre la première couche mince inorganique et la seconde couche mince inorganique est d'au moins 1,0 μm ; et la différence d'indice de réfraction entre la première couche de revêtement barrière aux gaz et la couche adhésive, ainsi que la différence d'indice de réfraction entre la seconde couche de revêtement barrière aux gaz et la couche adhésive, sont toutes deux inférieures ou égales à 0,05.

Actuellement, soit les films barrières aux gaz sont simples à fabriquer mais ils ne présentent pas de propriétés barrières au gaz satisfaisantes soit ils présentent des propriétés hautement barrière aux gaz mais ils sont compliqués à fabriquer et, donc, relativement chers.

## EXPOSÉ DE L'INVENTION

Un but de la présente invention est de proposer une protection hautement barrière aux gaz (HB) ayant une vitesse de transmission des gaz à la vapeur d'eau (WVTR pour « Water Vapor Transmission Rate ») strictement inférieure à $5.10^{-2}$g.m$^{-2}$.j$^{-1}$, voire une protection ultra hautement barrière aux gaz (UHB) ayant un WVTR inférieur à $10^{-3}$g.m$^{-2}$.j$^{-1}$, notamment pour protéger des cellules photovoltaïques, la protection devant être peu coûteuse et facile à fabriquer.

Pour cela, la présente invention propose un empilement hautement barrière aux gaz tel que défini en revendication 1 et comprenant deux films barrières aux gaz séparés par une couche adhésive barrière aux gaz, la couche adhésive barrière aux gaz ayant une perméabilité à l'eau $P_{H2O}$ inférieure à 2 g.mm.m$^{-2}$.jour$^{-1}$ et un coefficient de diffusion à l'eau D inférieur à $1.10^{-6}$ mm$^2$ jour$^{-1}$.

La couche adhésive barrière au gaz est en un matériau polymère : en poly(époxy), en poly(acrylate) ou en poly(méthacrylate).

L'empilement a une épaisseur totale inférieure à 150μm.

Par film barrière aux gaz (ou film bas cout, noté BC ou LC pour « Low Cost »), on entend ici et par la suite un film barrière aux gaz ayant un WVTR inférieur à 2 g.$^{-2}$.jour$^{-1}$ et, de préférence, supérieur à $1.10^{-1}$ g.$^{-2}$.jour$^{-1}$.

Les différentes valeurs de WVTR et de D sont données ici et par la suite à 38°C et pour une humidité relative (HR) de 100%. Les valeurs du coefficient WVTR peuvent être normalisées par l'épaisseur.

Il a été constaté que la présence d'au moins une telle couche adhésive barrières aux gaz dans un empilement comprenant de simples films barrières aux gaz dits BC améliore considérablement les propriétés barrière aux gaz de l'empilement obtenu et permet d'obtenir des propriétés barrières HB avec seulement 2 films BC et 1 couche adhésive barrière aux gaz.

De telles propriétés barrières ne seraient accessibles qu'avec un nombre important de films barrières BC laminés (au moins 4 selon nos estimations) si l'adhésif employé ne possède les propriétés barrières à la vapeur d'eau citées ci-dessus.

Cette augmentation considérable des propriétés barrières aux gaz avec la couche adhésive barrière aux gaz est d'autant plus avantageuse lorsque l'empilement doit avoir des propriétés UHB, puisque le nombre de couches nécessaires dans le cas de l'empilement avec l'adhésif standard deviendra difficilement réalisable ou insuffisamment flexible.

Avantageusement, l'empilement comprend de 2 à 5 films barrières aux gaz BC, deux films BC étant séparés par une couche adhésive barrière aux gaz. L'empilement comprend donc de 1 à 4 couches adhésives barrières aux gaz. Chaque couche adhésive barrière au gaz est disposée entre deux films barrières au gaz.

Selon une première variante de réalisation avantageuse, l'empilement comporte 4 couches adhésives barrière aux gaz et 5 films barrières au gaz ou 3 couches adhésives barrière aux gaz et 4 films barrières au gaz, l'empilement est un empilement ultra hautement barrière (noté UHB) aux gaz avec une vitesse de transmission de vapeur d'eau (WVTR) inférieur à $1.10^{-3}$ g.$^{-2}$ jour$^{-1}$.

Selon une deuxième variante de réalisation avantageuse, l'empilement comporte 1 couche adhésive barrière aux gaz et 2 films barrières au gaz ou 2 couches adhésives barrière aux gaz et 3 films barrières au gaz, l'empilement est un empilement hautement barrière (noté HB) aux gaz avec une vitesse de transmission de vapeur d'eau (WVTR) inférieure à $5.10^{-2}$ g.$^{-2}$.jour$^{-1}$, voire inférieure à $1.10^{-2}$ g.$^{-2}$.jour$^{-1}$.

Avantageusement, la couche adhésive barrière aux gaz a une épaisseur inférieure à 15μm et de préférence inférieure à 10μm.

Avantageusement, les films barrières aux gaz ont une épaisseur inférieure à 20μm et de préférence inférieure à 15μm.

Avantageusement, le film barrière aux gaz est formé d'un film polymère, par exemple en PET et/ou en PEN, recouvert par une couche en oxyde métallique, de préférence en oxyde de silicium et/ou en oxyde d'aluminium.

Le matériau polymère de la couche adhésive barrière aux gaz contient des additifs. Il s'agit d'absorbeurs, par exemple pour absorber l'oxygène, et/ou de charges dites passives pour augmenter la tortuosité du gaz dans le matériau modifié par les additifs. Les charges dites passives sont de dimension nanométrique dans au moins l'une de leur dimension et possèdent un rapport de forme (aspect ratio) élevé.

Avantageusement, l'empilement a une épaisseur totale inférieure à 100μm, et encore plus préférentiellement inférieure à 50 μm.

L'empilement selon l'invention présente de nombreux avantages :

- l'empilement selon l'invention est flexible puisque qu'il comprend peu de couches/films,
- le caractère barrière aux gaz de la couche adhésive sert de protection contre la perméation latérale des gaz et en particulier de la vapeur d'eau et de l'oxygène,
- l'empilement n'est pas cher à fabriquer puisque les films et les couches adhésives pris individuellement n'ont pas de propriété hautement barrière aux gaz, c'est l'association des différentes couches de l'empilement qui confèrent les propriétés hautement barrière aux gaz.

L'invention concerne également un ensemble comprenant successivement :

- un support, muni d'une première face principale et d'une seconde face principale,
- une cellule photovoltaïque, par exemple une cellule photovoltaïque pérovskite, disposée sur la première face principale du support,
- une couche adhésive additionnelle,
- un empilement, tel que défini précédemment, recouvrant la cellule photovoltaïque et la couche adhésive additionnelle, afin de l'encapsuler et de la protéger des éléments extérieurs, notamment de l'eau.

La couche adhésive additionnelle a, avantageusement, une vitesse de transmission de la vapeur d'eau inférieure 10 $g.mm.m^{-2}.j^{-1}$ et un coeffient de diffusion D inférieur à $10^{-6}$ $mm.s^{-1}$.

Selon une première variante de réalisation avantageuse, le support est en verre.

Selon une deuxième variante de réalisation avantageuse, le support est un film de PET recouvert par une couche électriquement conductrice, comme une couche d'oxyde transparent conducteur (TCO) et un autre empilement tel que défini précédemment est disposé sur la seconde face principale du support, par exemple, à l'aide d'une deuxième couche adhésive additionnelle afin d'améliorer ses propriétés barrière aux gaz. La deuxième couche adhésive additionnelle a, avantageusement, une vitesse de transmission de la vapeur d'eau inférieure 10 $g.mm.m^{-2}.j^{-1}$ et un coeffient de diffusion D inférieur à $10^{-6}$ $mm.s^{-1}$.

L'invention concerne également un dispositif comprenant, et de préférence constitué par un empilement tel que défini précédemment, disposé sur un support comprenant un film en PET recouvert par une couche électriquement conductrice, comme une couche de TCO, une couche adhésive additionnelle étant éventuellement positionnée entre l'empilement et le support. Des composants électroniques ou optoélectroniques peuvent ultérieurement être déposés sur un tel dispositif.

L'invention concerne également un procédé de fabrication d'un empilement hautement barrière aux gaz comprenant les étapes suivantes :

a) superposer successivement :

- un premier film barrière aux gaz BC,
- une couche adhésive barrière aux gaz, ayant une perméabilité à l'eau inférieure à 2 $g.mm.m^{-2}.jour^{-1}$ et un coefficient de diffusion à l'eau D inférieur à $1.10^{-6}$ $mm^2$ $jour^{-1}$, ou les précurseurs polymériques de la couche adhésive barrière aux gaz,
- un deuxième film barrière aux gaz BC,

b) laminer l'ensemble obtenu à l'étape a) moyennant quoi on obtient un empilement hautement barrière aux gaz,
c) éventuellement, réticuler sous un rayonnement ultra-violet les précurseurs polymériques de la couche adhésive barrière aux gaz.

Le procédé est simple à mettre en oeure et peu coûteux.

L'invention concerne également un procédé de fabrication d'un ensemble, tel que défini précédemment, comprenant les étapes successives suivantes :

i) fournir un support recouvert par une cellule photovoltaïque,
ii) réaliser les étapes a), b) et c) telles que définies précédemment, de préférence directement sur le support recouvert par la cellule photovoltaïque,

le procédé comportant une étape additionnelle entre l'étape i) et l'étape ii) au cours de laquelle on dépose une couche adhésive additionnelle entre la cellule photovoltaïque et le premier film barrière au gaz de l'empilement.

La couche adhésive additionnelle a, avantageusement, une vitesse de transmission de la vapeur d'eau inférieure 10 $g.mm.m^{-2}.j^{-1}$ et un coeffient de diffusion D inférieur à $10^{-6}$ $mm.s^{-1}$.

L'empilement barrière aux gaz peut être facilement laminé sur la cellule photovoltaïque à l'aide de la couche adhésive additionnelle.

L'invention concerne également un procédé de fabrication d'un dispositif tel que défini précédemment, comprenant les étapes successives suivantes :

i') fournir un support comprenant un film en PET recouvert par une couche électriquement conductrice, comme une couche de TCO,
ii') réaliser les étapes a), b) et c) telles que définies précédemment, de préférence directement sur le support,

le procédé comportant une étape additionnelle entre l'étape i') et l'étape ii') au cours de laquelle on dépose une couche adhésive additionnelle entre le film en PET du support et le premier film barrière au gaz.

La couche adhésive additionnelle a, avantageusement, une vitesse de transmission de la vapeur d'eau inférieure 10 g.mm.m$^{-2}$.j$^{-1}$ et un coefficent de diffusion D inférieur à 10$^{-6}$ mm.s$^{-1}$.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

## BRÈVE DESCRIPTION DES DESSINS

La présente invention sera mieux comprise à la lecture de la description d'exemples de réalisations donnés à titre purement indicatif et nullement limitatif en faisant référence aux dessins annexés sur lesquels :

Les figures1A et 1B représentent, de manière schématique et en coupe, un empilement hautement barrière aux gaz, selon différents modes de réalisation particulier de l'invention.

La figure 2A est un graphique représentant schématiquement le WVTR en fonction du temps d'un empilement.

La figure 2B est un graphique représentant schématiquement la quantité cumulée de perméant en fonction du temps, obtenu par intégration de la courbe de la figure 3A et permettant de déterminer le temps caractéristique du régime transitoire $T_L$.

La figure 3A représente, de manière schématique et en coupe, un ensemble comprenant un support, une cellule photovoltaïque, et un empilement hautement barrière aux gaz, selon un mode de réalisation particulier de l'invention.

La figure 3B représente, de manière schématique et en coupe, un ensemble comprenant un support, une cellule photovoltaïque, une couche adhésive additionnelle et un empilement hautement barrière aux gaz, selon un mode de réalisation particulier de l'invention.

La figure 3C représente, de manière schématique et en coupe, un ensemble comprenant un support, une cellule photovoltaïque et, de part et d'autre du support, une couche adhésive additionnelle et un empilement hautement barrière aux gaz, selon un mode de réalisation particulier de l'invention.

La figure 3D représente, de manière schématique et en coupe, un ensemble constitué d'un support, d'une couche adhésive et d'un empilement hautement barrière aux gaz, selon un mode de réalisation particulier de l'invention.

La figure 4 est un graphique représentant le WVTR en fonction du temps de différents éléments mono-couche ou multi-couches :

* un seul film barrière aux gaz bas cout (LC),
* deux films barrières aux gaz séparés par une couche adhésive normale (LC/A1/LC),
* quatre films barrières au gaz, une couche adhésive normale étant intercalée entre deux films barrières au gaz consécutifs (LC/A1/LC/A1/LC/A1/LC),
* deux films barrières aux gaz séparés par une couche adhésive barrière au gaz, selon mode de réalisation particulier de l'invention (LC/A2/LC).

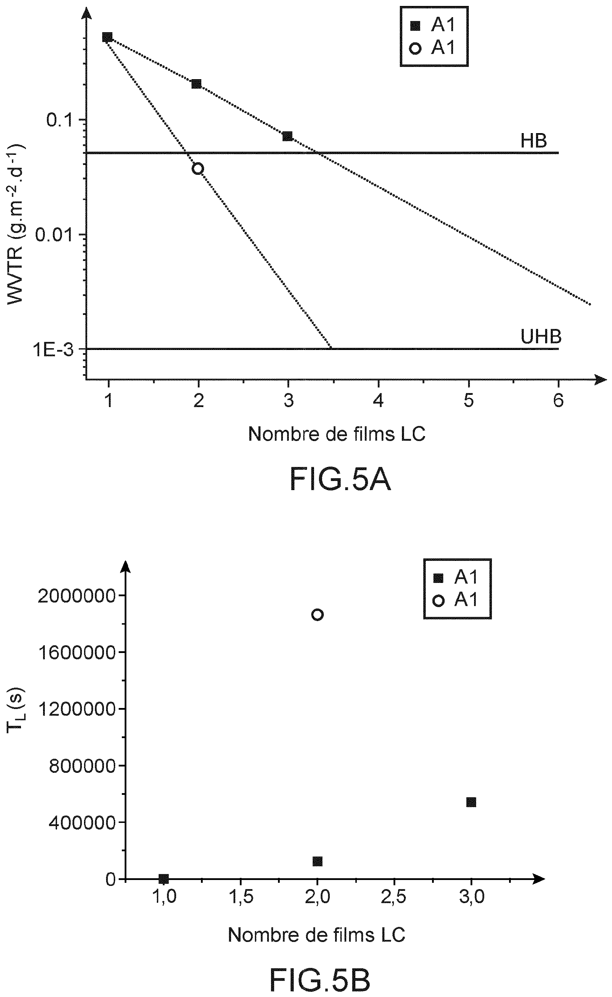

La figure 5A est un graphique représentant le WVTR de différents empilements en fonction du nombre de films barrières au gaz (LC) qu'ils contiennent, un des empilements contenant une couche adhésive barrière aux gaz (A2) selon un mode de réalisation particulier de l'invention et les autres empilements contenant une ou plusieurs couches adhésives standards (A1).

La figure 5B est un graphique représentant la quantité cumulée de perméant en fonction du temps, obtenu par intégration de la courbe de la figure 5A et permettant de déterminer le temps caractéristique du régime transitoire $T_L$ des différents empilements.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

En outre, dans la description ci-après, des termes qui dépendent de l'orientation, tels que « dessus », «dessous », etc. d'une structure s'appliquent en considérant que la structure est orientée de la façon illustrée sur les figures.

## EXPOSÉ DÉTAILLÉ DE MODES DE RÉALISATION PARTICULIERS

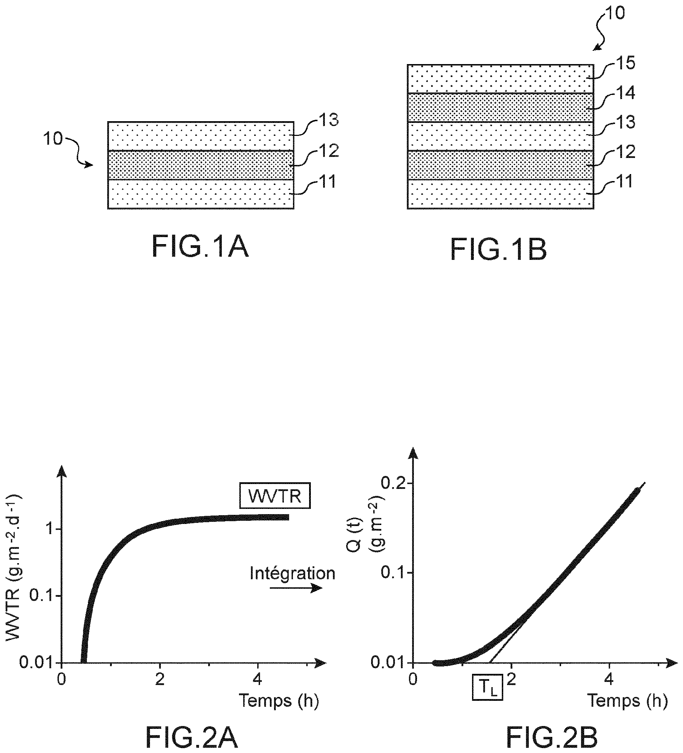

On se réfère tout d'abord aux figures 1A et 1B qui représentent un empilement 10 hautement barrière aux gaz.

L'empilement 10 hautement barrière aux gaz est un élément multi-couches comprenant au moins deux films barrières aux gaz 11, 13 et au moins une couche adhésive barrière aux gaz 12 (figure 1A).

Il peut comprendre plus d'une couche adhésive barrière aux gaz (par exemple 2 ou 3) et plus de deux films barrières aux gaz (par exemple 3 ou 4). Chaque couche adhésive barrière aux gaz est disposée entre deux films barrière aux gaz et directement en contact avec ces deux films barrière aux gaz. Par exemple, l'empilement, représenté sur la figure 1B, comprend deux couches adhésives barrière aux gaz 12, 14 et trois films barrières aux gaz 11, 13, 15.

Autrement dit, l'empilement comprend n couches adhésives barrières aux gaz et n+1 films barrières aux gaz avec n un entier supérieur ou égal à 1. De préférence, n va de 1 à 4.

L'empilement 10 est, de préférence, constitué d'une alternance de films barrières aux gaz et de couches adhésives barrières aux gaz. Autrement dit, il n'y a pas d'éléments intermédiaires entre les couches adhésives barrières aux gaz et les films barrière aux gaz.

Les couches adhésives barrière aux gaz 12, 14 ont une perméabilité à l'eau inférieure à 2 g.mm.m$^{-2}$.jour$^{-1}$ et un coefficient de diffusion à l'eau D inférieur à $1.10^{-6}$ mm$^2$ jour$^{-1}$.

Dans le cas d'une mesure de perméabilité (figure 2A), le flux de perméation en vapeur d'eau J au travers d'un échantillon, par exemple au travers de la couche adhésive, augmente jusqu'à un flux stabilisé J∞ (régime permanent) nommé WVTR (figure 2A) Le WVTR est mesuré pour une température et une hygrométrie données (38°C et 85%RH selon la norme ISO 15-106) et dépend de l'épaisseur de l'échantillon.

Le coefficient de diffusion D peut être déterminé, selon le standard ASTM D1434, en considérant le temps nécessaire à l'obtention d'un régime stabilisé (figure 2A), et plus particulièrement en considérant le temps caractéristique du régime transitoire (aussi noté $T_L$ pour « Time Lag »). Le coefficient de coefficient de diffusion D est calculé à partir de l'équation suivante :

$$D=e^2/(6.T_L)$$

avec e l'épaisseur de l'adhésif,
$T_L$ le temps caractéristique du régime transitoire

Le temps caractéristique du régime transitoire $T_L$ est obtenu en intégrant la courbe de flux qui permet d'obtenir la quantité cumulée de perméant (Qt) et en effectuant la régression linéaire à Q(t)=0 de l'évolution de Q(t) dans le régime (figure 2B).

La couche adhésive est en un matériau polymère. Le matériau polymère choisi parmi les polyépoxydes (aussi époxydes ou époxy), les poly(méthacrylates) et les poly(acrylates).

La couche adhésive peut comprendre, en outre, des additifs, par exemple choisis parmi les absorbeurs et/ou les charges passives.

Les absorbeurs (aussi appelés « getters ») sont des éléments absorbant l'oxygène.

Les charges passives augmentent la tortuosité du gaz dans le matériau dans lequel elles sont dispersées.

Par exemple, la couche adhésive est une résine époxy dans laquelle sont dispersés des additifs tels que des charges actives de type zéolithe ou des charges passives à haut facteur de forme de type plaquette tel que des alumino-silicates ou les phosphates de zirconium.

La force de pelage de la couche adhésive est, de préférence, supérieure à 3N/cm.

La couche adhésive a, de préférence, une épaisseur inférieure à 15μm et encore plus préférentiellement inférieure à 10μm. Elle a, de préférence, une épaisseur supérieure à 5μm.

Lorsque l'empilement 10 comporte plusieurs couches adhésives barrière aux gaz 12, 14 celles-ci peuvent être en des matériaux différents. De préférence, elles sont en un même matériau.

Les films barrière aux gaz 11, 13 et 15 de l'empilement 10 ont un WVTR inférieur à 2 g.$^{-2}$.jour$^{-1}$ et, de préférence, supérieur à $5.10^{-2}$ g.$^{-2}$.jour$^{-1}$.

Les films barrières aux gaz 11, 13 et 15 peuvent être en des matériaux différents. Ils sont, de préférence en un même matériau.

De préférence, les films barrière aux gaz sont formés d'un film polymère, par exemple en PET et/ou en PEN, recouvert par une couche inorganique, de préférence un oxyde métallique tel le $SiO_x$, $AlO_x$ et/ou $Zn/SnO_x$.

Les films barrière aux gaz 11, 13, 15 sont, avantageusement, des films non adhésifs. Le maintien mécanique de l'empilement est assuré par la ou les couches adhésives barrières aux gaz 12, 14.

Les films barrières aux gaz 11, 13, 15 ont une épaisseur inférieure à 20μm et de préférence inférieure à 15μm. Les films barrières aux gaz 11, 13, 15 ont, de préférence, une épaisseur supérieure à 10μm.

On choisira le nombre de couches adhésives barrière aux gaz/films barrière aux gaz de l'empilement ainsi que leurs épaisseurs en fonction de l'épaisseur totale de l'empilement désirée et des propriétés barrières aux gaz recherchées (HB ou UHB).

De préférence, l'empilement a une épaisseur totale inférieure à 150μm et de préférence inférieure à 100μm, et

encore plus préférentiellement inférieure à 50μm. Il a, de préférence, une épaisseur supérieure à 30μm.

Par exemple, un empilement 10 formé de 5 films barrière aux gaz de 12μm d'épaisseur et de 4 couches adhésives barrière aux gaz de 10μm d'épaisseur, a une épaisseur totale de 90μm.

Il est possible de recouvrir l'empilement 10 d'une feuille de protection, par exemple en polytétrafluoroéthylène (PTFE) ou poly(fluorure de vinylidène) PVDF, pour le protéger par exemple de l'environnement extérieur.

L'empilement tel que défini précédemment permet d'améliorer les propriétés barrière aux gaz d'un support et/ou de protéger des éléments disposés sur le support.

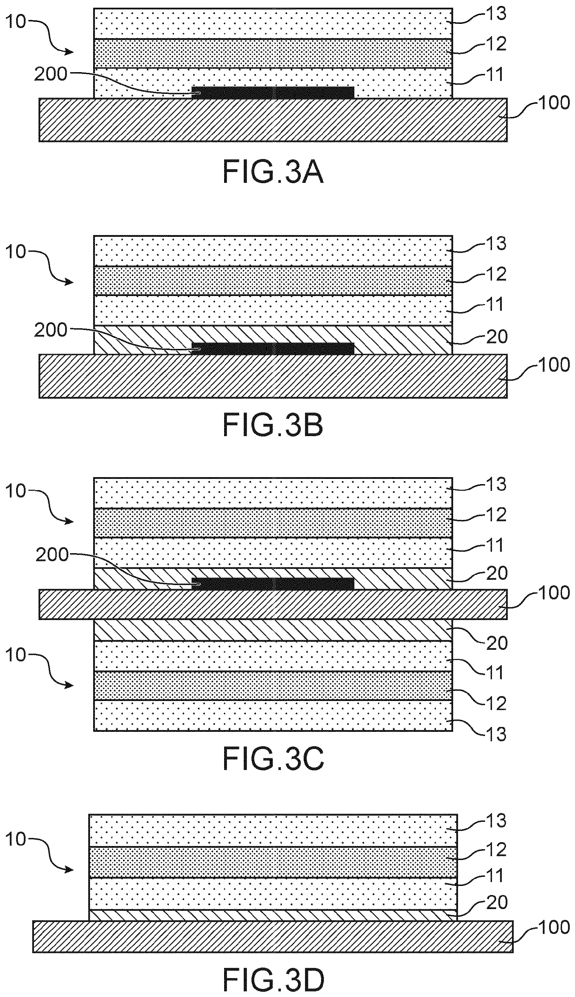

Selon une première variante de réalisation, représentée sur les figures 3A, 3B et 3C, l'empilement 10 est, avantageusement, positionné sur un support 100 (ou substrat) pour protéger un ou plusieurs composants. Le support 100 comprend une première face principale et une deuxième face principale. La première face principale (face avant) est recouverte par un ou plusieurs composants à protéger/encapsuler.

Avantageusement, les composants sont des composants électroniques ou optoélectroniques, afin de les protéger contre la perméation des gaz. Notamment, étant donné que l'empilement 10 a une faible épaisseur, il est avantageusement utilisé pour encapsuler des composants électroniques ou optoélectroniques flexibles, par exemple des cellules photovoltaïques organiques ou des cellules hybrides organiques-inorganiques. En particulier, il peut s'agir d'une cellule photovoltaïque 200 de type pérovskite.

Le support est, par exemple, en verre.

Selon une deuxième variante de réalisation, représentée sur les figures 3C et 3D, l'empilement est positionné, avantageusement, en face arrière d'un support 100, 110 pour améliorer ses propriétés barrière aux gaz.

Par exemple, le support 100, 110 est formé d'un film polymère, de préférence en poly(téréphtalate d'éthylène) (PET) et/ou en poly(naphtalate d'éthylène) (PEN), recouvert par une couche mince électriquement conductrice, par exemple en oxyde transparent conducteur (TCO pour « Transparent Conductive Oxide »). La couche mince électriquement conductrice est, avantageusement, positionnée en face avant.

Selon un mode de réalisation particulier représenté sur la figure 3C, un premier empilement 10 est disposé en face avant du support 100, et recouvre une ou plusieurs cellules photovoltaïques 200, et un deuxième empilement 10 est disposé en face arrière du support 100. Le premier empilement et le deuxième empilement peuvent être identiques ou différents.

Avantageusement, dans ces différentes variantes de réalisation, une couche adhésive additionnelle 20 peut être positionnée entre l'empilement 10 et la cellule photovoltaïque 200 et/ou entre l'empilement 10 et le support 100, 110 (figures 3B, 3C et 3D). La couche adhésive additionnelle 20 a, de préférence, les mêmes propriétés barrière aux gaz que la ou les couches adhésives barrière aux gaz 12, 14 de l'empilement 10. Elle pourrait avoir des propriétés différentes.

Le procédé de fabrication d'un empilement 10 va maintenant être décrit. Le procédé comprend les étapes successives suivantes :

- fournir un premier film barrière aux gaz 11,
- déposer sur le premier film barrière aux gaz 11, un pli formé par une couche adhésive barrière aux gaz 12, ayant une perméabilité à l'eau inférieure à 2 g.mm.m$^{-2}$.jour$^{-1}$ et un coefficient de diffusion à l'eau D inférieur à $1.10^{-6}$ mm$^2$ jour$^{-1}$, et un deuxième film barrière aux gaz 13,
- éventuellement, déposer un ou plusieurs autres plis jusqu'à avoir le nombre de couches adhésives barrière aux gaz 12, 14 et de films barrière aux gaz désirés 11, 13, 15,
- laminer l'ensemble obtenu précédemment, moyennant quoi on obtient un empilement 10 hautement barrière aux gaz.

Alternativement, il est possible de déposer à la place de la couche adhésive aux gaz, une solution contenant un solvant, un amorceur de polymérisation et les précurseurs polymériques de la couche adhésive aux gaz.

Par précurseur, on entend des monomères et/ou des oligomères et/ou des pré-polymères menant à la formation de la résine polymérique.

Selon cette alternative, le procédé comprend une étape supplémentaire au cours de laquelle on applique un rayonnement ultra-violet pour polymériser/réticuler les précurseurs polymériques. Cette étape supplémentaire peut être réalisée avant l'étape de lamination ou après. De préférence, elle est réalisée après l'étape de lamination.

Selon une première variante de réalisation, pour fabriquer un ensemble ou un dispositif tel que décrit précédemment, on réalise les étapes a), b) et c) puis on dépose l'empilement sur un support 100, 110 éventuellement recouvert par une cellule photovoltaïque 200.

Selon une autre variante de réalisation, on réalise les étapes a), b) et c) directement sur le support 100, 110 éventuellement recouvert par une cellule photovoltaïque 200.

Avantageusement, le procédé comporte une étape additionnelle, avant de réaliser les étapes a), b) et c), au cours de laquelle on dépose une couche adhésive additionnelle 20 entre la cellule photovoltaïque 15 et l'empilement 10 et/ou entre le support 100, 110 et l'empilement 10.

Exemples illustratifs et non limitatifs d'un mode de réalisation :

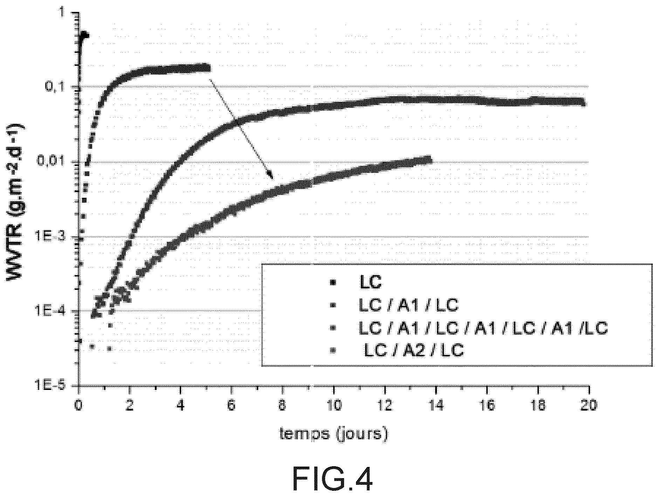

Dans les exemples suivants, on a déterminé le temps caractéristique du régime transitoire ($T_L$) et le WVTR de différents empilements et de différentes couches (figures 4, 5A et 5B).

Les résultats sont répertoriés dans le tableau suivant :

| | $T_L$ (s) | WVTR (g.m$^{-2}$.j$^{-1}$) |
|---|---|---|
| **LC (12 microns)** | 2300s | $5.10^{-1}$ |
| **A2 (240$\mu$m)** | 96800 | 2.3 |
| **LC/A1/LC (125$\mu$m)** | 124000s | $2.10^{-1}$ |
| **LC/A1/LC/A1/LC (235 $\mu$m)** | 541600 | $7.10^{-2}$ |
| **LC/A2/LC** | 1864000 | $3.7.10^{-2}$ |

Le film barrière aux gaz bas cout (référencé LC dans le tableau ci-dessus) possède un WVTR dans le régime stabilisé de 0,5g.m$^2$.j$^{-1}$ et un temps caractéristique du régime transitoire ($T_L$) de 2300s.

La couche adhésive barrière A2 aux gaz possède un WVTR de 2,3 g.m$^{-2}$.j$^{-1}$ pour une épaisseur de 240 microns (perméabilité à l'eau de 0.6 g.mm.m$^{-2}$.j$^{-1}$) et induit un régime transitoire long permettant d'allonger la durée de stabilisation du flux. Cela se traduit par un coefficient de diffusion relativement bas (propriété du matériau de 9,92*10$^{-8}$ mm$^2$.s$^{-1}$ dans le cas de l'adhésif A2 de notre exemple) et un temps caractéristique du régime transitoire $T_L$ de 96800s pour 240 microns.

L'adhésif « standard » employé (noté A1) a une perméabilité et un coefficient de diffusion largement supérieurs à, respectivement, 10 g.mm.m$^{-2}$.j$^{-1}$ et 10$^{-6}$ mm.s$^{-1}$. Par exemple, il peut s'agir d'un adhésif acrylique, par exemple l'adhésif acrylique sensible à la pression et commercialisé par la société 3M sous le nom 467M.

Pour la réalisation du laminé avec les films barrière bas coût LC et les adhésifs standards A1 (100 microns pour chaque couche d'adhésif), on constate une baisse progressive de la perméabilité et une hausse progressive du $T_L$ (figures 5A et 5B). Un film HB pourra être obtenu avec 4 films LC laminés. L'obtention d'un film UHB est estimée à la lamination d'au moins 7 films LC.

Pour la réalisation de laminés avec des films barrières bas cout LC et un ou plusieurs adhésifs barrières A2 (30 microns pour chaque couche d'adhésif), on constate une baisse bien plus rapide du WVTR au regard de l'emploi de l'adéhsif A1 (3,7.10$^{-2}$ g.m$^{-2}$.j$^{-1}$ contre 2.10$^{-1}$ g.m$^{-2}$.j$^{-1}$) et une augmentation considérable du temps caractéristique du régime transitoire (1800 000s contre 124000s avec l'adhésif A1). Un film HB pourra être obtenu avec 2 films LC laminés (contre 4 avec l'adhésif A1) et l'obtention d'un film UHB est estimée à la lamination d'au moins 3 à 4 films LC.

Ce comportement est particulièrement remarquable.

En effet, une couche d'adhésif A2 de 30 microns (tel qu'employé dans la laminé en exemple) possèderait seul un WVTR de 18,4 g.m$^{-2}$.j$^{-1}$. La perméabilité du laminé L constitué de A/B/A est calculée selon l'équation suivante (lois de Fick) :

$$\frac{1}{\text{WVTR(L)}} = \frac{1}{\text{WVTR(A)}} + \frac{1}{\text{WVTR(B)}} + \frac{1}{\text{WVTR(A)}}$$

Soit une perméabilité d'environ 2,5.10$^{-1}$ g.m$^{-2}$.j$^{-1}$ (ce qui est plus ou moins obtenu avec l'adhésif A1).

Par ailleurs, une couche A2 de 30 microns possède un $T_L$ théorique de 1500s (considérant que le $T_L$ évolue avec le carré de l'épaisseur) et le $T_L$ de LC est faible (2300s). Cependant, le $T_L$ mesuré du laminé LC/A2/LC est considérable (presque 2.10$^6$). Le résultat obtenu est nettement meilleur que celui attendu. Une telle valeur $T_L$ pour le laminé LC/A2/LC est non prévisible par le calcul en considérant les lois fondamentales de la diffusion.

## Revendications

1. Empilement (10) hautement barrière aux gaz, présentant un coefficient WVTR strictement inférieur à 5.10$^{-2}$ g.$^{-2}$.jour$^{-1}$, ayant une épaisseur totale inférieure à 150$\mu$m et comprenant deux films barrières aux gaz (11, 13) séparés par une couche adhésive barrière aux gaz (12), la couche adhésive barrière aux gaz étant en contact direct avec les deux films barrière au gaz, la couche adhésive barrière aux gaz (12) étant en poly(époxy), en poly(acrylate) ou en poly(méthacrylate) et contient des additifs, tels que des absorbeurs et/ou des charges passives, la couche adhésive barrière aux gaz (12) ayant une perméabilité à l'eau inférieure à 2 g.mm.m$^{-2}$.jour$^{-1}$ et un coefficient de diffusion à l'eau D inférieur à $1.10^{-6}$ mm$^2$ jour$^{-1}$.

2. Empilement (10) selon la revendication 1, **caractérisé en ce que** la couche adhésive barrière aux gaz (12) a une épaisseur inférieure à 15$\mu$m et de préférence inférieure à 10$\mu$m.

3. Empilement (10) selon l'une des revendications 1 et 2, **caractérisé en ce que** les films barrières aux gaz (11, 13) ont une épaisseur inférieure à 20$\mu$m et de préférence inférieure à 15$\mu$m.

4. Empilement (10) selon l'une quelconque des revendications 1 à 3, **caractérisé en ce que** le film barrière aux gaz (11, 13) est formé d'un film polymère, par exemple en PET et/ou en PEN, recouvert par une couche en oxyde métallique, de préférence, en oxyde de silicium et/ou en oxyde d'aluminium.

5. Empilement (10) selon l'une quelconque des revendications précédentes, dans lequel la couche adhésive barrière aux gaz (12) contient des additifs de type zéolithe ou des charges passives, ces charges passives étant des charges à haut facteur de forme de type plaquette tels que des alumino-silicates ou des phosphates de zirconium.

6. Empilement (10) selon l'une quelconque des revendications précédentes, **caractérisé en ce qu'**il comporte de 1 à 4 couches adhésives barrière aux gaz et de 2 à 5 films barrières au gaz, chaque couche adhésive barrière au gaz étant disposée entre deux films barrières au gaz.

7. Empilement (10) selon l'une quelconque des revendications précédentes, **caractérisé en ce qu'**il a une épaisseur totale-inférieure à 100$\mu$m et encore plus préférentiellement inférieure à 50 $\mu$m.

8. Empilement selon l'une quelconque des revendications précédentes, **caractérisé en ce qu'**il est constitué de deux films barrières aux gaz (11, 13) séparés par une couche adhésive barrière aux gaz (12), les films barrières aux gaz étant formés d'un film polymère recouvert par une couche d'oxyde métallique et la couche adhésive barrière aux gaz étant en poly(acrylate).

9. Ensemble comprenant successivement :

- un support (100), muni d'une première face principale et d'une seconde face principale,
- une cellule photovoltaïque (200), par exemple une cellule photovoltaïque pérovskite,

disposée sur la première face principale du support (100),

- une couche adhésive additionnelle (20),
- un empilement (10) selon l'une quelconque des revendications 1 à 7, recouvrant la cellule photovoltaïque (200) et la couche adhésive additionnelle (20).

10. Ensemble selon la revendication 8, **caractérisé en ce que** le support (100) est en verre.

11. Ensemble selon la revendication 9, **caractérisé en ce que** le support (100) est un film de PET recouvert par une couche électriquement conductrice, comme une couche de TCO, et **en ce qu'**un autre empilement (10) tel que défini dans l'une quelconque des revendications 1 à 8 est disposé sur la seconde face principale du support (100).

12. Dispositif comprenant un empilement (10) tel que défini dans l'une quelconque des revendications 1 à 8, disposé sur un support (110) comprenant un film en PET recouvert par une couche électriquement conductrice, comme une couche de TCO, une couche adhésive additionnelle (20) étant éventuellement positionnée entre l'empilement (10) et le support (110).

13. Procédé de fabrication d'un empilement (10) hautement barrière aux gaz comprenant les étapes suivantes :

a) superposer successivement :

- un premier film barrière aux gaz (11),
- une couche adhésive barrière aux gaz (12) en poly(époxy), en poly(acrylate) ou en poly(méthacrylate) et contient des additifs, tels que des absorbeurs et/ou des charges passives, la couche adhésive barrière aux gaz (12) ayant une perméabilité à l'eau inférieure à 2 g.mm.m$^{-2}$.jour$^{-1}$ et un coefficient de diffusion à l'eau D inférieur à $1.10^{-6}$ mm$^2$ jour$^{-1}$, ou les précurseurs polymériques de la couche adhésive barrière aux gaz (12),
- un deuxième film barrière aux gaz (13).

b) laminer l'ensemble obtenu à l'étape a) moyennant quoi on obtient un empilement (10) hautement barrière aux gaz, l'empilement ayant une épaisseur totale inférieure à 150 μm,
c) éventuellement, réticuler sous un rayonnement ultra-violet les précurseurs polymériques de la couche adhésive barrière aux gaz (12).

14. Procédé de fabrication d'un ensemble, tel que défini dans l'une des revendications 9 à 11, comprenant les étapes successives suivantes :

i) fournir un support (100) recouvert par une cellule photovoltaïque (200),
ii) réaliser les étapes a), b) et c) telles que définies dans la revendication 13,

le procédé comportant une étape additionnelle entre l'étape i) et l'étape ii) au cours de laquelle on dépose une couche adhésive additionnelle (20) entre la cellule photovoltaïque (200) et le premier film barrière au gaz (12).

15. Procédé de fabrication d'un dispositif tel que défini dans la revendication 12, comprenant les étapes successives suivantes :

i') fournir un support (110) comprenant un film en PET recouvert par une couche électriquement conductrice, comme une couche de TCO,
ii') réaliser les étapes a), b) et c) telles que définies dans la revendication 13,

le procédé comportant une étape additionnelle entre l'étape i') et l'étape ii') au cours de laquelle on dépose une couche adhésive additionnelle (20) entre le film en PET du support (110) et le premier film barrière au gaz (12).

**Patentansprüche**

1. Stapelung (10) mit hoher Gasbarriere, die einen WVTR-Koeffizienten von strikt unter $5,10^{-2}$ g.$^{-2}$.Tag$^{-1}$ aufweist, eine Gesamtdicke von weniger als 150 μm aufweist und zwei Gasbarrierefolien (11, 13) umfasst, die durch eine Gasbarriere-Klebeschicht (12) getrennt sind, wobei die Gasbarriere-Klebeschicht in direktem Kontakt mit den beiden Gasbarrierefolien steht, wobei die Gasbarriere-Klebeschicht (12) aus Poly(epoxid), Poly(acrylat) oder Poly(methacrylat) besteht und Additive wie Absorber und/oder passive Füllstoffe enthält, wobei die Gasbarriere-Klebeschicht (12) eine Wasserdurchlässigkeit von weniger als 2 g.mm.nr$^{-2}$ .Tag$^{-1}$ und einen Wasserdiffusionskoeffizienten D von weniger als $1,10^{-6}$ mm$^2$ Tag$^{-1}$ aufweist.

2. Stapelung (10) nach Anspruch 1, **dadurch gekennzeichnet, dass** die Gasbarriere-Klebeschicht (12) eine Dicke von weniger als 15 μm und vorzugsweise weniger als 10 μm aufweist.

3. Stapelung (10) nach einem der Ansprüche 1 und 2, **dadurch gekennzeichnet, dass** die Gasbarrierefolien (11, 13) eine Dicke von weniger als 20 μm und vorzugsweise von weniger als 15 μm aufweisen.

4. Stapelung (10) nach einem der Ansprüche 1 bis 3, **dadurch gekennzeichnet, dass** die Gasbarrierefolie (11, 13) aus einer Polymerfolie, beispielsweise aus PET und/oder PEN, gebildet ist, die mit einer Metalloxidschicht, vorzugsweise aus Siliziumoxid und/oder Aluminiumoxid, überzogen ist.

5. Stapelung (10) nach einem der vorhergehenden Ansprüche, wobei die Gasbarriere-Klebeschicht (12) Additive des Zeolithtyps oder passive Füllstoffe enthält, wobei diese passiven Füllstoffe plattenartige Füllstoffe mit hohem Formfaktor wie Aluminiumsilikate oder Zirkonphosphate sind.

6. Stapelung (10) nach einem der vorhergehenden Ansprüche, **dadurch gekennzeichnet, dass** er 1 bis 4 Gasbarriere-Klebeschichten und 2 bis 5 Gasbarriere-Klebefolien aufweist, wobei jede Gasbarriere-Klebeschicht zwischen zwei Gasbarriere-Klebefolien angeordnet ist.

7. Stapelung (10) nach einem der vorhergehenden Ansprüche, **dadurch gekennzeichnet, dass** er eine Gesamtdicke von weniger als 100 μm und noch bevorzugter weniger als 50 μm aufweist.

**8.** Stapelung nach einem der vorhergehenden Ansprüche, **dadurch gekennzeichnet, dass** sie aus zwei Gasbarrierefolien (11, 13) besteht, die durch eine Gasbarriere-Klebeschicht (12) getrennt sind, wobei die Gasbarrierefolien aus einer Polymerfolie gebildet sind, die mit einer Metalloxidschicht überzogen ist, und die Gasbarriere-Klebeschicht aus Poly(acrylat) besteht.

**9.** Baugruppe, nacheinander umfassend:

- einen Halter (100), der mit einer ersten Hauptseite und einer zweiten Hauptseite versehen ist,
- eine Photovoltaikzelle (200), beispielsweise eine perovskitische Photovoltaikzelle,

auf der ersten Hauptseite des Trägers (100) angeordnet,

- eine zusätzliche Klebeschicht (20),
- eine Stapelung (10) nach einem der Ansprüche 1 bis 7, die die Photovoltaikzelle (200) und die zusätzliche Klebeschicht (20) abdeckt.

**10.** Baugruppe nach Anspruch 8, **dadurch gekennzeichnet, dass** der Träger (100) aus Glas besteht.

**11.** Baugruppe nach Anspruch 9, **dadurch gekennzeichnet, dass** der Träger (100) eine PET-Folie ist, die mit einer elektrisch leitenden Schicht, wie einer TCO-Schicht, bedeckt ist, und dass eine weitere Stapelung (10), wie in einem der Ansprüche 1 bis 8 definiert, auf der zweiten Hauptseite des Trägers (100) angeordnet ist.

**12.** Vorrichtung, die eine Stapelung (10) nach einem der Ansprüche 1 bis 8 umfasst, die auf einem Träger (110) angeordnet ist, der eine PET-Folie umfasst, die mit einer elektrisch leitenden Schicht, wie einer TCO-Schicht, bedeckt ist, wobei eventuell eine zusätzliche Klebeschicht (20) zwischen der Stapelung (10) und dem Träger (110) positioniert ist.

**13.** Verfahren zur Herstellung einer Stapelung (10) mit hoher Gasbarriere, das die folgenden Schritte umfasst:

a) Überlagern nacheinander:

- einer ersten Gasbarrierefolie (11),
- einer Gasbarriere-Klebeschicht (12) aus Poly(epoxid), Poly(acrylat) oder Poly(methacrylat), die Additive wie Absorber und/oder passive Füllstoffe enthält, wobei die Gasbarriere-Klebeschicht (12) eine Wasserdurchlässigkeit von weniger als 2 $g.mm.m^{-2}.Tag^{-1}$ und einen Wasserdiffusionskoeffizienten D von weniger als $1,10^{-6}$ $mm^2$ $Tag^{-1}$ aufweist, oder die polymeren Vorläufer der Gasbarriere-Klebeschicht (12),
- einer zweiten Gasbarrierefolie (13).

b) Laminieren der in Schritt a) erhaltenen Baugruppe, wodurch eine Stapelung (10) mit hoher Gasbarriere entsteht, wobei die Stapelung eine Gesamtdicke von weniger als 150 $\mu$m aufweist,
c) gegebenenfalls Vernetzen der polymeren Vorläufer der Gasbarriere-Klebeschicht (12) unter UV-Strahlung.

**14.** Verfahren zur Herstellung einer Baugruppe, wie in einem der Ansprüche 9 bis 11 definiert, umfassend die folgenden aufeinanderfolgenden Schritte:

i) Bereitstellen eines Trägers (100), der von einer Photovoltaikzelle (200) abgedeckt ist,
ii) Durchführen der Schritte a), b) und c), wie in Anspruch 13 definiert,

Verfahren mit einem zusätzlichen Schritt zwischen Schritt i) und Schritt ii), bei dem eine zusätzliche Klebeschicht (20) zwischen der Photovoltaikzelle (200) und der ersten Gasbarrierefolie (12) aufgetragen wird.

**15.** Verfahren zur Herstellung einer Vorrichtung gemäß Anspruch 12, umfassend die folgenden aufeinanderfolgenden Schritte:

i') Bereitstellen eines Trägers (110), der eine PET-Folie umfasst, die mit einer elektrisch leitenden Schicht, wie einer TCO-Schicht, bedeckt ist,
ii') Durchführen der Schritte a), b) und c), wie in Anspruch 13 definiert,

**EP 3 835 063 B1**

Verfahren mit einem zusätzlichen Schritt zwischen Schritt i') und Schritt ii'), bei dem eine zusätzliche Klebeschicht (20) zwischen der PET-Folie des Trägers (110) und der ersten Gasbarrierefolie (12) aufgetragen wird.

**Claims**

1. A highly gas-barrier stack (10), having a WVTR coefficient strictly less than $5x10^{-2}$ g.$^{-2}$.day$^{-1}$, having a total thickness of less than $150\mu$m and comprising two gas barrier films (11, 13) separated by a gas-barrier adhesive layer (12), the gas barrier adhesive layer being in direct contact with the two gas barrier films, the gas barrier adhesive layer (12) being made of poly(epoxy), poly(acrylate) or poly(methacrylate) and containing additives, such as absorbers and/or passive fillers, the gas barrier adhesive layer (12) having a water permeability less than 2 g.mm.nr$^{-2}$.day$^{-1}$ and a water diffusion coefficient D less than $1x10^{-6}$ mm$^2$ day$^{-1}$.

2. The stack (10) according to claim 1, **characterized in that** the gas barrier adhesive layer (12) has a thickness of less than $15\mu$m and preferably less than $10\mu$m.

3. The stack (10) according to one of claims 1 and 2, **characterized in that** the gas barrier films (11, 13) have a thickness of less than $20\mu$m and preferably less than $15\mu$m.

4. The stack (10) according to any of claims 1 to 3, **characterized in that** the gas barrier film (11, 13) is formed of a polymer film, for example of PET and/or PEN, covered with a layer of metal oxide, preferably silicon oxide and/or aluminum oxide.

5. The stack (10) according to any of the preceding claims, wherein the gas barrier adhesive layer (12) contains zeolite type additives or passive fillers, these passive fillers being platelet type high-aspect ratio fillers such as aluminosilicates or zirconium phosphates.

6. The stack (10) according to any of the preceding claims, **characterized in that** it comprises from 1 to 4 gas barrier adhesive layers and from 2 to 5 gas barrier films, each gas barrier adhesive layer being arranged between two gas barrier films.

7. The stack (10) according to any of the preceding claims, **characterized in that** it has a total thickness of less than 100 $\mu$m and even more preferably less than 50 $\mu$m.

8. The stack according to any of the preceding claims, **characterized in that** it consists of two gas barrier films (11, 13) separated by a gas barrier adhesive layer (12), the gas barrier films being formed of a polymer film covered with a metal oxide layer and the gas barrier adhesive layer being of poly(acrylate).

9. An assembly successively comprising:

   - a support (100), provided with a first main face and a second main face,
   - a photovoltaic cell (200), for example a perovskite photovoltaic cell,

   arranged on the first main face of the support (100),

   - an additional adhesive layer (20),
   - a stack (10) according to any of claims 1 to 7, covering the photovoltaic cell (200) and the additional adhesive layer (20).

10. The assembly according to claim 8, **characterized in that** the support (100) is of glass.

11. The assembly according to claim 9, **characterized in that** the support (100) is a PET film covered with an electrically conductive layer, such as a TCO layer, and **in that** another stack (10) as defined in any of claims 1 to 8 is arranged on the second main face of the support (100).

12. A device comprising a stack (10) as defined in any of claims 1 to 8, arranged on a support (110) comprising a PET film covered with an electrically conductive layer, such as a TCO layer, an additional adhesive layer (20) being possibly positioned between the stack (10) and the support (110).

**13.** A method for manufacturing a highly gas-barrier stack (10) comprising the following steps of:

   a) successively superimposing:

   - a first gas barrier film (11),
   - a gas barrier adhesive layer (12) made of poly(epoxy), poly(acrylate) or poly(methacrylate) and containing additives, such as absorbers and/or passive fillers, the gas barrier adhesive layer (12) having a water permeability of less than 2 $g.mm.m^{-2}.day^{-1}$ and a water diffusion coefficient D of less than $1 \times 10^{-6}$ $mm^2$ $day^{-1}$, or the polymeric precursors of the gas barrier adhesive layer (12),
   - a second gas barrier film (13).

   b) rolling the assembly obtained in step a) whereby a high gas-barrier stack (10) is obtained, the stack having a total thickness of less than 150$\mu$m,
   c) optionally, crosslinking the polymeric precursors of the gas barrier adhesive layer (12) in ultraviolet radiation.

**14.** A method for manufacturing an assembly according to any of claims 9 to 11, comprising the following successive steps of:

   i) providing a support (100) covered with a photovoltaic cell (200),
   ii) performing steps a), b) and c) as defined in claim 13,

   the method comprising an additional step between step i) and step ii) during which an additional adhesive layer (20) is deposited between the photovoltaic cell (200) and the first gas barrier film (12).

**15.** A method for manufacturing a device as defined in claim 12, comprising the following successive steps of:

   i') providing a support (110) comprising a PET film covered with an electrically conductive layer, such as a TCO layer,
   ii') performing steps a), b) and c) as defined in claim 13,

   the method comprising an additional step between step i') and step ii') during which an additional adhesive layer (20) is deposited between the PET film of the support (110) and the first gas barrier film (12).

FIG.1A

FIG.1B

FIG.2A

FIG.2B

FIG.3A

FIG.3B

FIG.3C

FIG.3D

FIG.4

FIG.5A

FIG.5B

**EP 3 835 063 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2017086382 A

**Littérature non-brevet citée dans la description**

- **FAHLTEICH et al.** The Role of Defects in Single- and Multi- Layer Barriers for Flexible Electronics. *Fall 2014 SVC Bulletin*